# EUROPEAN PATENT SPECIFICATION

(11) **EP 2 020 820 B1**
(45) Date of publication and mention of the grant of the patent: **21.03.2012**
(21) Application number: 07720856.9
(22) Date of filing: 19.04.2007
(51) Int. Cl.: H04W 36/18, H04L 5/00, H04L 27/26

(54) **METHOD AND DEVICE FOR CONFIGURING TRAFFIC PATHS IN RELAY SYSTEM AND SWITCHING METHOD FOR MOBILE STATIONS**
VERFAHREN UND EINRICHTUNG ZUM KONFIGURIEREN VON VERKEHRSWEGEN IN EINEM RELAISSYSTEM UND UMSCHALTVERFAHREN FÜR MOBILSTATIONEN
PROCÉDÉ ET DISPOSITIF POUR CONFIGURER LES CHEMINS DE TRAFIC DANS UN SYSTÈME RELAIS ET PROCÉDÉ DE COMMUTATION POUR STATIONS MOBILES

(30) Priority: 09.05.2006 CN 200610060611
(43) Date of publication of application: 04.02.2009
(73) Proprietor: Huawei Technologies Co., Ltd., Longgang District, Shenzhen Guangdong 518129 (CN)
(72) Inventor: ZHAO, Quanbo, Shenzhen, Guangdong 518129 (CN); ZHENG, Ruobin, Shenzhen, Guangdong 518129 (CN)
(74) Representative: Kreuz, Georg Maria
(86) International application number: PCT/CN2007/001283
(87) International publication number: WO 2007/128209

(56) References cited:
- WO-A-2005/122622
- WO-A-2006/023771
- CN-A- 1 134 211
- CN-A- 1 239 634
- JP-A- 2004 282 218
- US-A1- 2005 201 325
- US-A1- 2005 232 181

## Description

### Field of the Invention

The present invention relates to the technical field of wireless communication, more particularly to wireless communication technique with a relay system, and still more particularly to a method and device for configuring service paths in a relay system and a method for mobile station handover.

### Background of the Invention

Broadband wireless access includes broadband fixed wireless access and broadband mobile wireless access. In a broadband fixed wireless access system, there are two kinds of network elements, i.e., base stations (BSs) and subscriber stations (SSs). In a broadband mobile wireless access system, there are two kinds of network elements, i.e., base stations (BSs) and mobile subscriber stations (MSSs). In addition, a concept of WiMAX relay system (RS) has been proposed. As important role of an RS is to serve as a relay between a BS and an SS/MSS so as to expand the coverage area of the BS or increase the throughput of the SS/MSS.

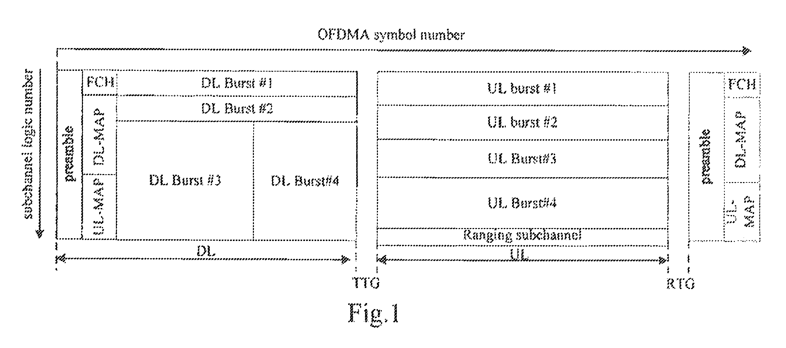

According to the relevant standards, for an authorized frequency band, a duplex mode can be a Frequency Division Dual (FDD) mode or a Time Division Dual (TDD) mode, and an SS in the FDD mode can be of half-duplex FDD; while for a frequency band free of authorization, a duplex mode can only be TDD. A frame structure of Orthogonal Frequency Division Multiplex Access (OFDMA) (or Scalable OFDMA) in the TDD mode is shown in Figure 1. In an OFDMA (or SOFDMA) mode, a group of adjacent sub-channels and a set of OFDMA symbols are allocated for a Physical Layer (PHY) burst of OFDMA (or SOFDMA).

Data is transmitted in a frame format in a physical channel. Each frame includes a downlink sub-frame (DL sub-frame) and an uplink sub-frame (UL sub-frame). In the TDD mode, the UL sub-frame is transmitted firstly, the uplink sub-frame is transmitted subsequently. A burst can be allocated to an SS/MSS (or a group of subscribers) in the uplink, while transmitted by the BS as a transmission unit to the SS/MSS in the downlink. Initial access Ranging, periodicity Ranging and bandwidth requests of an uplink SS are performed through a Ranging sub-channel. A downlink sub-frame starts with a preamble for physical synchronization; a Frame Control Head (FCH) follows for designating the profile and length of one or more downlink bursts immediately following the FCH. Following the FCH is a downlink-MAP (DL-MAP) message and an uplink-MAP (UP-MAP) message. The DL-MAP indicates the sub-channel and OFDMA symbol position and profile of an individual downlink burst, while the UP-MAP indicates the sub-channel and OFDMA symbol position and profile of an individual uplink burst. In a TDD system, a transmit/receive transition gap (TTG) and a receive/transmit transition gap (RTG) are inserted at the time of alternating between a downlink sub-frame and an uplink sub-frame, so as to leave a period of time for the BS to accomplish transition between receiving and transmitting.

A frame structure of OFDMA (or SOFDMA) in the FDD mode differs from that in the TDD mode in that an uplink sub-frame and an downlink sub-frame are transmitted at different frequencies without setting the TTG and RTG

According to related standards, definitions regarding handover are as follows:

(1) handover (HO): an MS moving from a service area of one BS to that of another BS. There are two kinds of handover defined as:

- break-before-make HO: breaking connection with the original BS providing services before handover;

- make-before-break HO: making handover before breaking connection with the original BS providing services.

(2) fast BS switching (FBSS): BS handover using a fast switching mechanism, in which the MS performs data transmitting/receiving only with an active BS (for example, an anchor BS), and the BS may be different for each frame, which depends on the BS selecting mechanism.

(3) soft handover (SHO): the process that an MS migrates from a service area of one or more BSs to that of other one or more BSs. In such a process, in the downlink direction, two or more BSs transmit Packet Data Units (PDUs) of a same Media Access Control (MAC) /PHY, and combination of the PDUs is accomplished by the MS; while in the uplink direction, two or more BSs can receive a same PDU from the MS, so that diversity combination can be accomplished between the BSs.

In the bandwidth allocation model of a relay system, bandwidth allocation (BW allocation) is only implemented in an anchor BS, and the anchor BS allocates the uplink and downlink bandwidths respectively for a BS and an RS. Service dispatching is mainly implemented in the BS, and the RS just dispatches uplink and downlink services of the RS passively as instructed by the BS. Specifically, there are two different modes as follows:

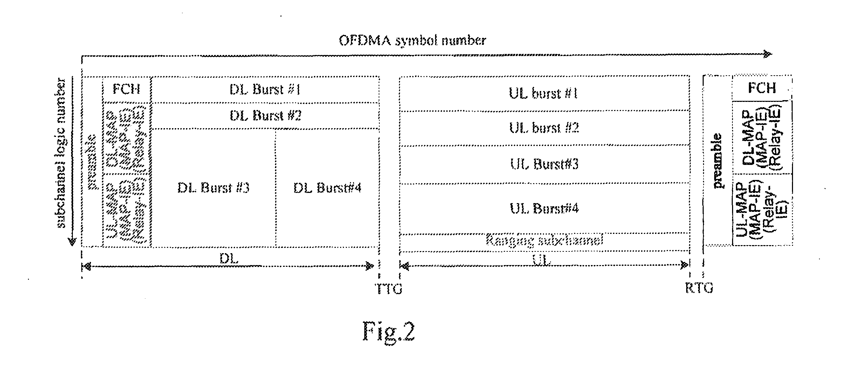

(1) After the BS allocating the uplink and downlink bandwidths for the BS and the RS, the position and profile of each burst to the respective connection of the SS/MSS attached to the RS are specified in a Relay Information Element (Relay-IE) of a DL-MAP message and a UL-MAP message sent by the BS. As shown in Figure 2, the Relay-IE is a newly added Information Element (IE) in the DL-MAP and UL-MAP messages, and can be regarded as an expanded Map Information Element (MAP-IE) in the DL-MAP and UL-MAP messages for defining the position and profile of each burst of the respective connection of the SS/MSS attached to the RS.

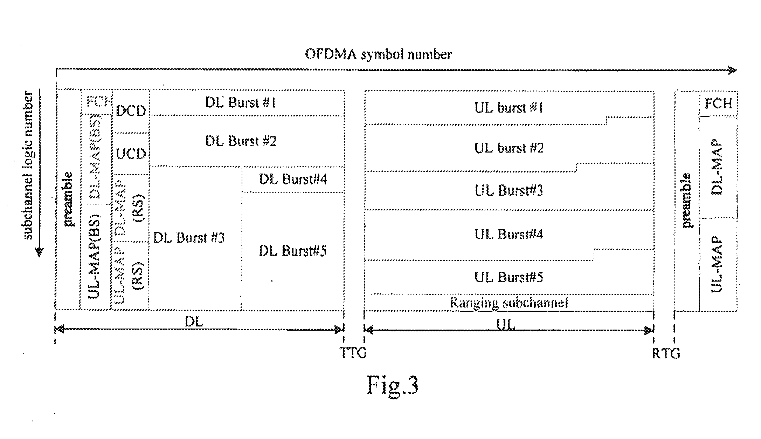

(2) Bandwidth Grant (BW Grant) is implemented by specifying the position and profile of each burst of the respective connection of the SS/MSS attached to the RS in a MAP-IE of a Relay Station DL-MAP (DL-MAP (RS)) message and a Relay Station UL-MAP (UL-MAP (R-S)) message sent by the BS. As shown in Figure 3, a DL-MAP (RS) message and a UL-MAP (RS) message are newly added management messages from the BS to the RS positioned in a downlink sub-frame in the PHY frame structure of the BS. The MAP-IE defines the position and profile of each burst of the respective connection of the SS/MSS attached to the RS.

In addition, two types of relay models are defined in an existing relay system, one is a high-level relay mode, i.e., an MS/SS accesses a BS through wireless relaying performed by an RS; another is a simplified relay mode, i.e., downlink datagram of a BS or messages except DL-MAP messages and UL-MAP messages can be relayed by an RS, while other uplink bursts of the BS except initial access Ranging periodicity Ranging and bandwidth request messages of an MS/SS can be relayed by the RS.

Document D1 (WO 2005/122622 A) discloses a method for facilitating handoffs for a mobile terminal in a wireless access network that is capable of supporting different types of handoffs. The different handoff types may include soft handoffs and fast base station switching (FBSS). In operation, context information associated with supporting wireless communications between the wireless access network and the mobile terminal are determined. Based on whether the context information is shared between base stations involved in the handoff or transferred from one base station to another of the base station involved in the handoff, a particular handoff type is selected from the different handoff types that are available.

Although in existing standards, concepts of BS, MS and RS have been defined, and the two kinds of Relay models for a relay system have been proposed, the specific implementation of handover of an MS within a BS and involving an RS is not defined, which results in poor service continuity and poor handover reliability in the process of MS handover.

### Summary of the Invention

A method and apparatus for configuring service paths in a relay system in embodiments of the present invention to improve the continuity and reliability of the handover process of an MS within a BS, with respect to an RS.

A method for configuring service paths in a relay system is provided in an embodiment of the present invention, including:

configuring the service paths respectively between a handover source station and an MS and between a handover destination station and the MS when it is determined that the MS needs to be switched between a BS and an attached RS or between different RSs attached to a BS, and transmitting same data; and

implementing combined reception of data according to receiving situations of the two paths, and transmitting same data in the two paths.

An apparatus for configuring service paths in a relay system is provided in an embodiment of the present invention, including:

a determining unit adapted to determine whether an MS needs to be switched or not, the switching including switching between a BS and an attached RS or switching between different RSs attached to a BS; and

a configuring unit adapted to configure the service paths; in which:

when the determining unit determines that the MS needs to be switched between a BS and an RS attached thereto, or between different RSs attached to a BS, the configuring unit configures the service paths respectively between a handover source station and the MS and between a handover destination station and the MS.

In the technical solution provided in the embodiments of the present invention, when an MS is switched between a as and an RS attached thereto or between different RSs attached to the as, service paths are configured respectively between a handover source station and the MS and between a handover destination station and the MS, so as to ensure service continuity in the process of handover of the MS, and to improve handover reliability. Furthermore, in this solution, an uplink and downlink MAP-IE of a BS or different RSs can be re-mapped into a same burst block position to save bandwidth.

### Brief Description of the Drawings

Figure 1 is a schematic diagram of the OFDMA (or SOFDMA) frame structure in a TDD mode in the prior art;

Figure 2 is a schematic diagram of the OFDMA (or SOFDMA) frame structure of a BS in a TDD relay system in the prior art;

Figure 3 is another schematic diagram of the OFDMA (or SOFDMA) frame structure of a BS in a TDD relay system in the prior art;

Figure 4 is a schematic diagram showing MS handover in a first case (MS is switched between a BS and an RS attached thereto) according to an embodiment of the present invention;

Figure 5 is a schematic diagram showing MS handover in a second case (MS is switched between different RSs attached to a BS) according to an embodiment of the present invention;

Figure 6 is a schematic diagram showing the principle of realizing that the BS employs unicast mode and relay data parameters are indicated by Relay-IE in a first embodiment of the present invention;

Figure 7 is a schematic diagram showing the principle of realizing that the BS employs unicast mode and relay data parameters are indicated by DL-MAP (RS) and US-MAP (RS) in the first embodiment of the present invention;

Figure 8 is a schematic diagram showing the principle of realizing that the BS employs multicast mode and relay data parameters are indicated by Relay-IE in a first embodiment of the present invention;

Figure 9 is a schematic diagram showing the principle of realizing that the BS employs multicast mode and relay data parameters are indicated by DL-MAP (RS) and UL-MAP (RS) in the first embodiment of the present invention;

Figure 10 is a schematic diagram showing the principle of realizing that a dedicated relay area is already allocated in a frame structure and relay data parameters are indicated by Relay-IE in a first embodiment of the present invention;

Figure 11 is a schematic diagram showing the principle of realizing that a dedicates relay area is already allocated in a frame structure and relay data parameters are indicated by DL-MAP (RS) and UL-MAP (RS) in the first embodiment of the present invention;

Figure 12 is a schematic diagram showing the principle of realizing that the BS employs unicast mode and relay data parameters are indicated by Relay-IE in a third embodiment of the present invention;

Figure 13 is a schematic diagram showing the principle of realizing that the BS employs unicast mode and relay data parameters are indicated by DL-MAP (RS) and UL-MAP (RS) in the third embodiment of the present invention;

Figure 14 is a schematic diagram showing the principle of realizing that the BS employs unicast mode and relay data parameters are indicated by Relay-IE in a fourth embodiment of the present invention;

Figure 15 is a schematic diagram showing the principle of realizing that the BS employs unicast mode and relay data parameters are indicated by DL-MAP (RS) and UL-MAP (RS) in the fourth embodiment of the present invention;

Figure 16 is a schematic diagram showing the principle of realizing that the BS employs unicast mode and relay data parameters are indicated by Relay-IE in a fifth embodiment of the present invention;

Figure 17 is a schematic diagram showing the principle of realizing that the BS employs unicast mode and relay data parameters are indicated by DL-MAP (RS) and UL-MAP (RS) in the fifth embodiment of the present invention;

Figure 18 is a flowchart showing hard handover for an MS in an embodiment of the present invention; and

Figure 19 is a flowchart showing soft handover (SHO) for an MS in an embodiment of the present invention.

### Detailed Description of the Invention

Hereinafter, the present invention is described by specific embodiments with reference to the accompanied drawings to make the principle, the features, and advantages of the present invention more apparent.

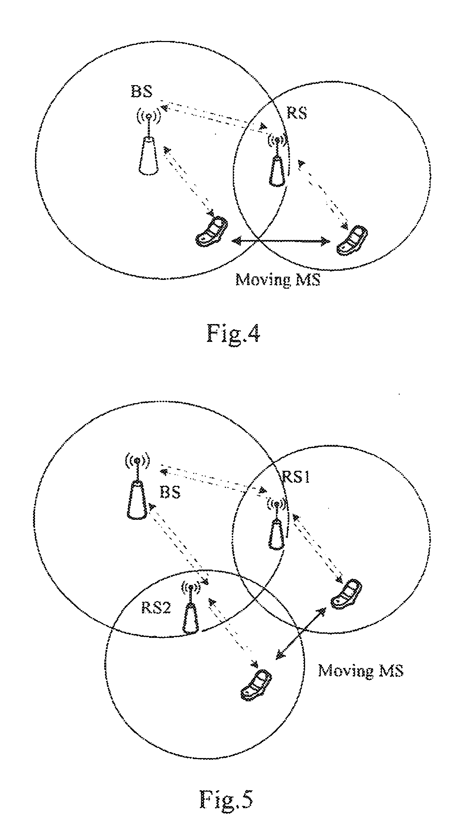

As shown in Figure 4, in a first case of MS handover, the BS allocates two service connections with same QoS for each of the downlink and the uplink of the MS in the process of switching the MS to a BS from an RS attached thereto, or from a BS to an RS attached thereto, so as to ensure that respective bandwidth is allocated for the MS both in the source BS and the destination BS. In the process of handover, there are two service paths at he same time between the MS and the BS, one is a direct path between the MS and the BS, another is a relay path passing through the RS.

In order to be distinguished, hereinafter different 1Es will be described on the senders and receivers of the burst blocks indicated by the IEs, for example, a BS-RS IE indicates an IE specifying a parameter of a burst block sent from a BS to an RS, i.e., an IE in a DL-MAP message; an RS-MS IE indicates an IE specifying a parameter of a burst block sent from an RS to an MS, which may be a Relay-IE in a UL-MAP or a DL-MAP message, or an IE in a UL-MAP (RS) or a DL-MAP (RS) message.

The description presented in the embodiments is illustrated here:

BS downlink direction indicates a direction in which a BS sends data to its direct underling (RS or MS);

BS uplink direction indicates a direction in which a direct underling (RS or MS) of a BS sends data to the BS;

RS downlink direction indicates a direction in which an RS sends data to its direct underling (MS);

RS uplink direction indicates a direction in which a direct underling (MS) of an RS sends data to the RS.

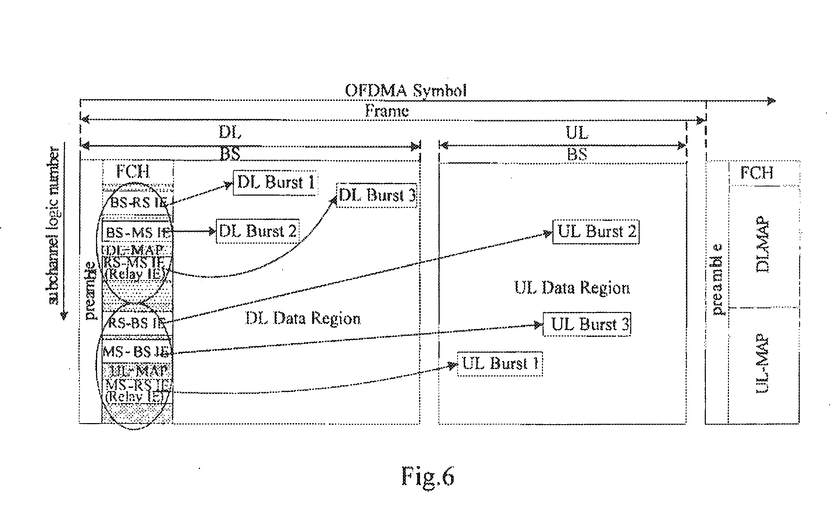

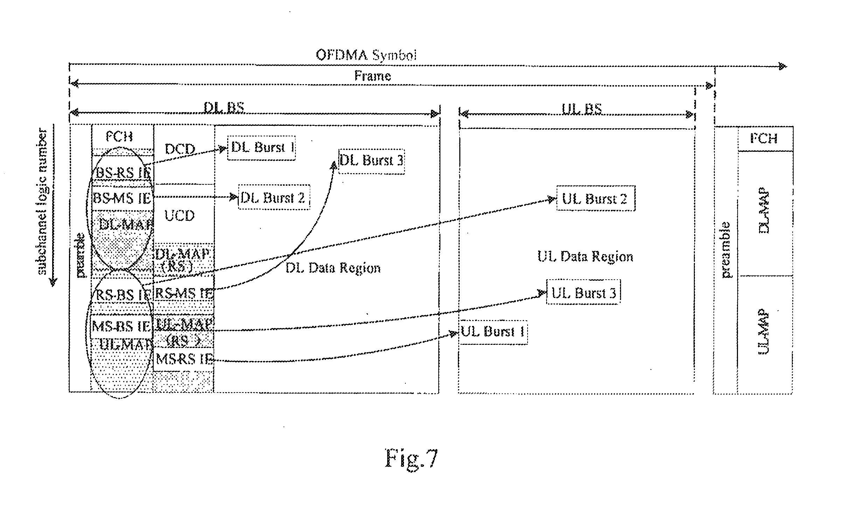

As shown in figures 6 and 7, in a first embodiment of the present invention, a solution for implementing handover is as follows:

1) In the BS downlink direction, the BS sends same data to the RS and the MS respectively, and uses a BS-RS IE and a BS-MS IE respectively in the DL-MAP to indicate burst blocks in different positions. The RS receives downlink data according to the BS-RS IE indication, and the MS receives downlink data according to the BS-MS IE indication;

2) In the BS uplink direction, the BS uses an RS-BS IE and an MS-BS IE respectively in the UL-MAP to indicate burst blocks in different positions. The RS sends uplink data according to the RS-BS IE indication, and the MS sends uplink data according to the MS-BS IE indication.

3) In the RS downlink direction, a relay data parameter forwarded by the RS to the MS can be indicated by a Relay-IE in the DL-MAP (RS) or DL-MAP in the BS frame structure, and define the position and profile of each burst in the respective MS downlink connection passing through the RS. According to different RS relay modes, the MS retrieves a relay parameter in two ways: (a) high-level relay mode, where the relay parameter of the MS is retrieved through the RS relaying; (b) simplified relay mode, where only relayed data pass through the RS, the relay parameter of the MS is retrieved by receiving the respective position of the BS frame.

4) In the RS uplink direction, a relay data parameter to be forwarded by the RS from the MS to the BS can be indicated by the Relay-IE in the UL-MAP (RS) or UL-MAP; and define the position and the profile of each burst in the respective MS uplink connection passing through the RS.

With this solution, the BS needs to allocate bandwidths both for the RS and the MS (for example, occupying different sub-channels).

As shown in Figure 6, the BS employs a unicast mode, and the relay data parameter forwarded by the RS to the MS and BS are indicated by the Relay-IE in the DL-MAP and UL-MAP. DL-burst1, DL-burst2 and DL-burst3 are data blocks respectively sent from the BS to the RS, from the BS to the MS, and from the RS to the MS, in which DL-burst2 and the DL-burst3 should be data blocks with same contents, while DL-burst1 should contain at least the contents of DL-burst2 and DL-burst3 (because the RS may have data from other MSs to relay). UL-burst1, UL-burst2 and UL-burst3 are data blocks respectively sent from the MS to the RS, from the RS to the BS and from the MS to the BS, in which UL-burst1 and the UL-burst3 should be data blocks with same contents, while UL-burst2 should contain at least the contents of UL-burst1 and UL-burst3 (because the RS may have data from other MSs to relay).

As shown in Figure 7, the BS employs a unicast mode, and the relay data parameters forwarded by the RS to the MS and BS are indicated by the DL-MAP (RS) and UL-MAP (RS). Contents of other data blocks are the same as that in Figure 6.

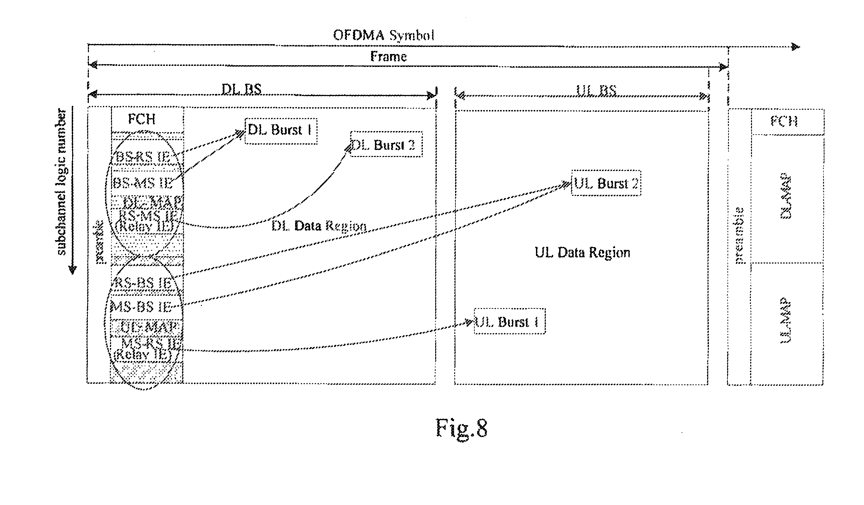

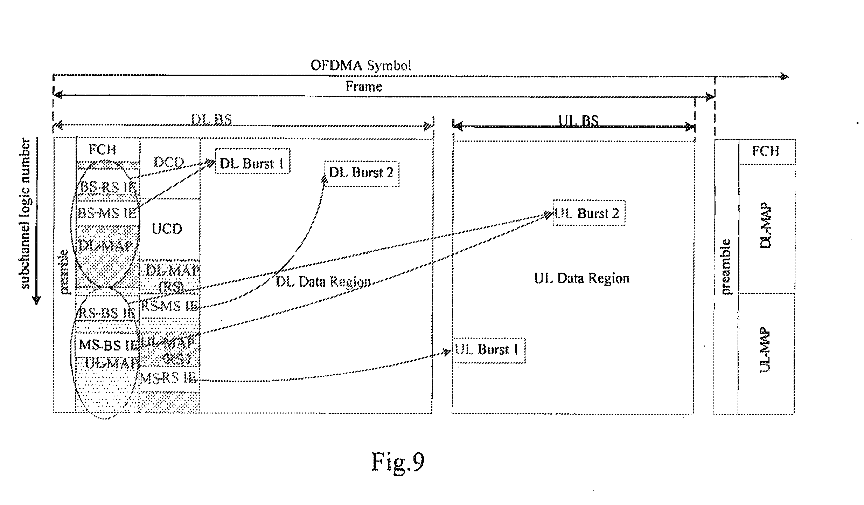

As shown in Figures 8 and 9, in a second embodiment of the present invention, solution for implementing handover is as follows:

1) In the BS downlink direction, the BS sends only one set of data, the BS-RS IE and the BS-MS IE in the DL-MAP indicate the burst block at a same position for the RS and the MS to receive at the same position. The RS receives downlink data according to the BS-RS IE indication, and the MS receives downlink data according to the BS-MS IE indication;

2) In the BS uplink direction, the BS employs the RS-BS IE and the MS-BS IE in the UL-MAP respectively to indicate the burst block at a same position. The RS sends uplink data according to the RS-BS IE indication, and the MS sends uplink data according to the MS-BS IE indication;

3) The relay data parameters between the RS and the MS are set in the same way as that in the first embodiment.

Compared with the first embodiment, the RS and the MS in this embodiment obtain the same bandwidths, but occupy the BS bandwidth by only half of that in the first embodiment.

As shown in Figures 8, the BS employs a multicast mode, and relay data parameters forwarded by the RS to the MS and BS are indicated by the Relay-IE in the DL-MAP and UL-MAP.

As shown in Figure 9, the BS employs a multicast mode, and relay data parameters forwarded by the RS to the BS and BS are indicated by the DL-MAP (RS) and UL-MAP (RS).

In addition to the first and second embodiments, in the first case of handover, it is also possible to re-map only the BS-RS IE and BS-MS IE in the BS downlink DL-MAP, or re-map only the RS-BS IE and MS-BS IE in the BS uplink UL-MAP.

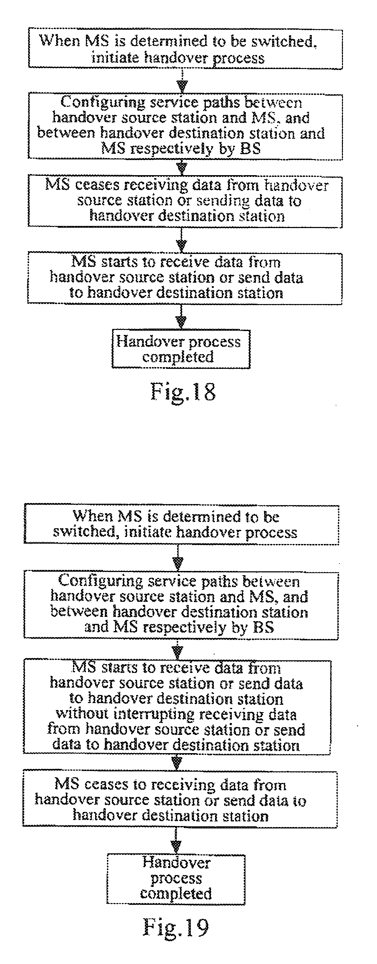

As shown in Figures 18 and 19, in the first and the second embodiments for the first case of handover, a basic handover flow exemplified by an MS switching from an RS to a BS is as follows:

before handover, the MS receives data blocks forwarded by the RS according to the DL-MAP (Relay-IE) or the DL-MAP (RS) indication received directly from the BS or relayed by the RS; and sends data blocks to the RS according to the DL-MAP (Relay-IE) or the DL-MAP (RS) indication received directly from the BS or relayed by the RS.

2) The handover process is initiated, the BS ensures that there are two service paths between the BS and the MS, such as, in the downlink direction: (a) BS→RS, RS→MS; (b) BS →MS; and in the uplink direction, (a) MS→RS, RS→BS; (b) MS→ BS; (for hard handover (FBSS):)

3) The MS ceases receiving data from or sending data to the RS firstly;

4) The MS starts to receive data or send data to the BS directly;

5) The handover process is completed.

( for soft handover (SHO):)

3) The MS receives data from or sends data to the BS directly without interrupting receiving data from or sending data to the RS;

4) The MS interrupts receiving data from or sending data to the RS;

5) The handover process is completed.

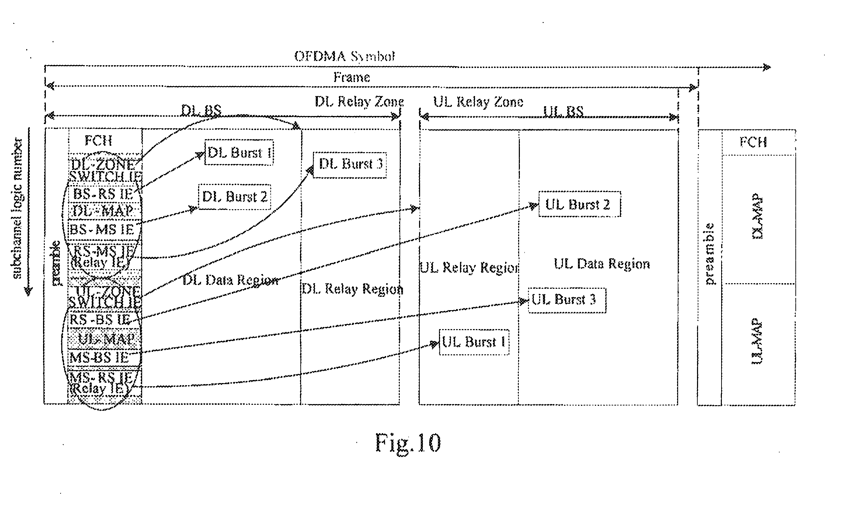

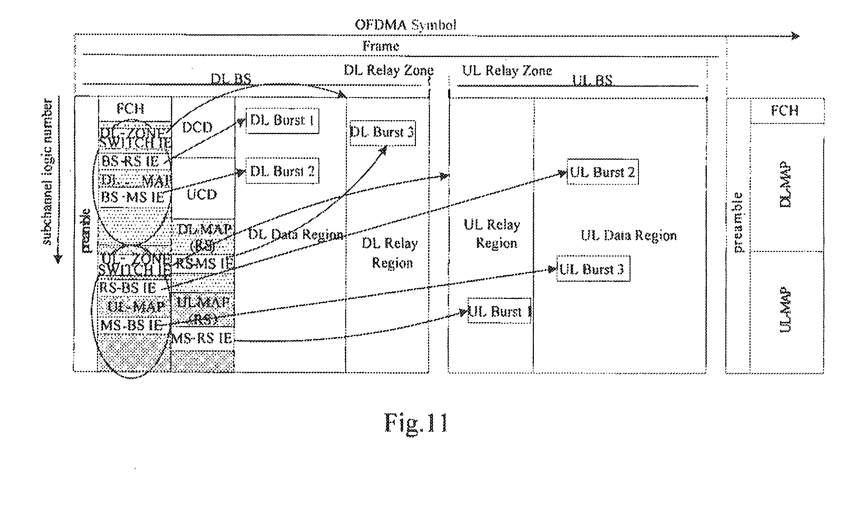

Figures 10 and 11 show another solution of the present invention where a dedicated Relay Zone is already allocated in the frame structure, and other embodiments are similar to this. DL-ZONE SWITCH IE indicates the starting position of a DL Relay Zone, and UL-ZONE SWITCH IE indicates the starting position of a UL Relay Zone. Data relayed by the RS to the MS presents in the DL Relay Zone, and data from the MS relayed by the RS to the BS presents in the UL Relay Zone.

As shown in Figure 5, in the second case of MS handover, the MS moves to switch from RS1 to RS2. Similar to the processing in the first case of handover, the BS needs to ensure that same connection bandwidths are available in both the handover source station (RS1) and the handover destination station (RS2) to be allocated to the BS during the MS handover process. In the process of handover, there are two service paths exist between the MS and the BS, one is a relay path passing through the RS1, and another is a relay path passing through the RS2.

Embodiments of the present invention also provide an apparatus for configuring service paths in a relay system. The apparatus includes: a determining unit adapted to determine whether an MS needs handover or not, the handover including handover between a BS and an attached RS or handover between different RSs attached to a BS;

a configuring unit adapted to configure the service paths; in which:

when the determining unit determines that the MS needs handover between a BIS and an RS attached thereto, or between different RSs attached to a BS, the configuring unit configures service paths respectively between a handover source station and the MS and between a handover destination station and the MS.

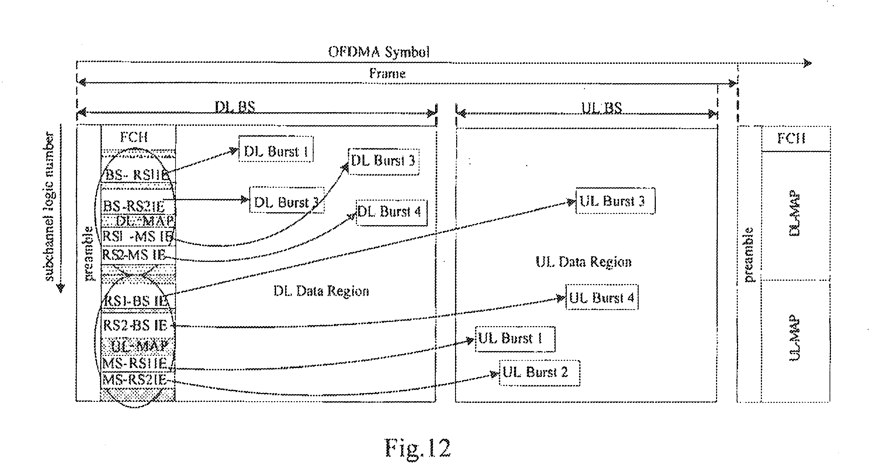

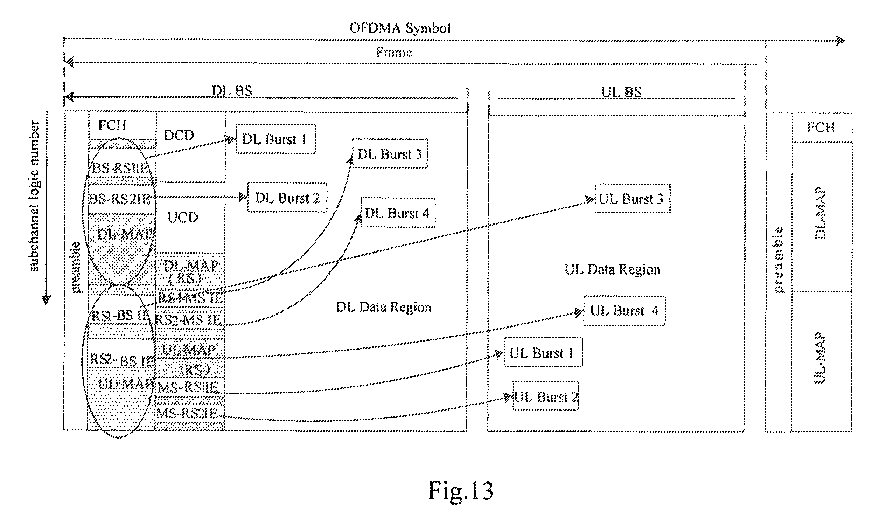

As shown in Figures 12 and 13, in a third embodiment of the present invention, solution for implementing handover is as follows:

1) In the BS downlink direction, the BS-RS1 IE and the BS-RS2 IE in the DL-MAP indicate burst blocks at different positions respectively, i.e., the BS sends same data to the RS1 and the RS2 respectively. The RS1 receives downlink data according to the BS-RS1 1E indication, and the RS2 receives downlink data according to the BS-RS2 IE indication;

2) In the BS uplink direction, the BS employs the RS1-BS IE and the RS2-BS IE in the UL-MAP to indicate burst blocks at different positions respectively. The RS1 sends uplink data according to the RS1-BS IE indication, and the RS2 sends uplink data according to the RS2-BS IE indication;

3) In the RS downlink direction, relay data parameters forwarded to the MS by the RS1 and the RS2 can be indicated by the Relay-IE in the DL-MAP (RS) or the DL-MAP in the BS frame structure, and point at burst blocks at different positions which is received in diversity combination by the MS. The MS retrieves the relay parameters in two ways depending on the different RS relay modes: (a) in a high-level relay mode, the relay parameters of the MS are retrieved through RS relaying; (b) in a simplified relay mode, only relay data pass through the RS, the relay parameters of the MS are retrieved through receiving respective positions of the BS frame by the MS;

4) In the RS uplink direction, relay data parameters from the MS to be relayed by the RS1 and the RS2 to the BS can be indicated by the Relay-IE in the UL-MAP (RS) and the UL-MAP in the BS frame structure, and point at burst blocks at different positions; the MS needs to send two same sets of data.

As shown in Figure 12, the BS-RS1 in the DL-MAP indicates the position of each burst in the respective connection of the MS attached to the RS1 in the downlink direction; the BS-RS2 IE in the DL-MAP indicates the position of each burst in the respective connection of the MS attached to the RS2 in the downlink direction; the RSI-BS IE in the UL-MAP indicates the position of each burst in the respective connection of the MS attached to the RS1 in the uplink direction; the RS2-BS IE in the UL-MAP indicates the position of each burst in the respective connection of the MS attached to the RS2 in the uplink direction. The DL-burst1, DL-burst2, DL-burst3 and DL-burst4 are data blocks sent respectively from the BS to the RS 1, from the BS to the RS2, from the RS1 to the MS and from the RS2 to the MS. The DL-burst3 and DL-burst4 should be data blocks with same contents, and the DL-burst1 and DL-burst2 should contain at least the contents of the DL-burst3 and DL-burst4 (because the RS1 and the RS2 may have data from other MSs to relay). The UL-burst1, UL-burst2, UL-burst3 and UL-burst4 are data blocks sent respectively from the MS to the RS1, from the MS to the RS, from the RS1 to the BS and from the RS2 to the BS. The UL-burst1 and UL-burst2 should be data blocks with same contents, and the UL-burst3 and the UL-burst4 should contain at least the contents of the UL-burst1 and UL-burst2 (because the RS1 and RS2 may have data from other MSs to relay).

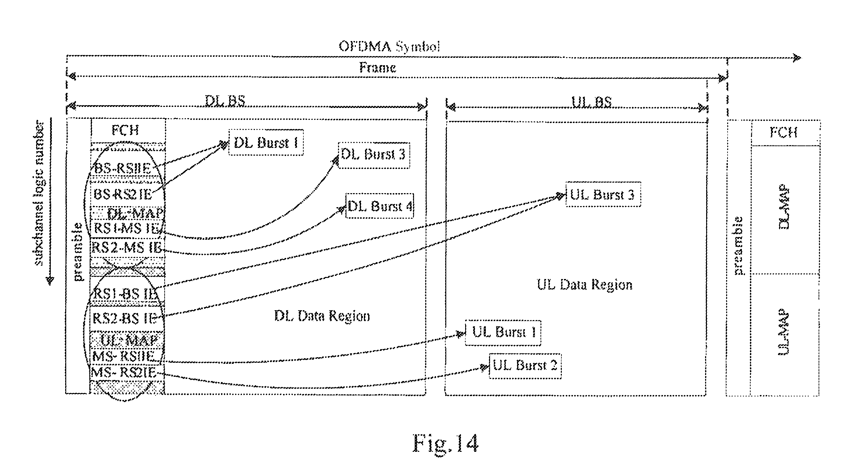

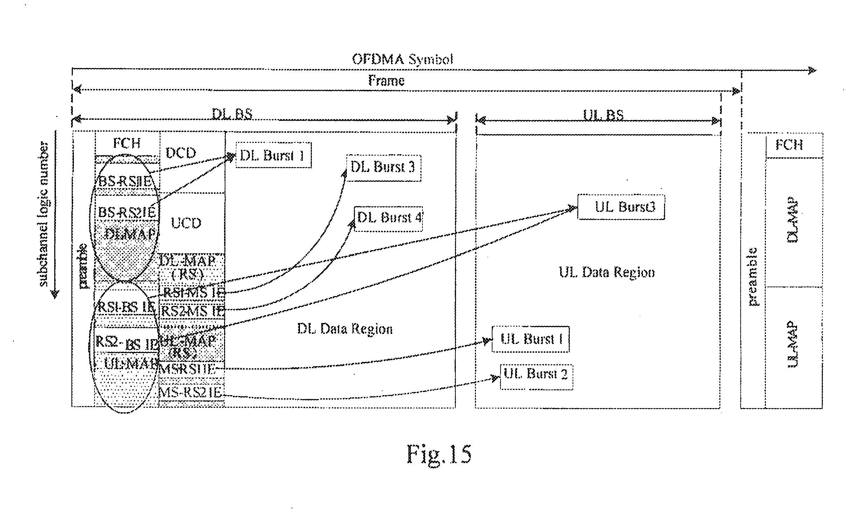

As shown in figures 14 and 15, in a fourth embodiment of the present invention, solution for implementing handover is as follows:

1) In the BS downlink direction, the BS sends only one set of data, the BS-RS1 IE and the BS-RS2 IE in the DL-MAP indicate the burst block at a same position for the RS1 and the RS2 to receive at the same position. The RS1 receivers downlink data according to the BS-RS1 IE indication, and the RS2 receives downlink data according to the BS-RS2 IE indication;

2) In the BS uplink direction, the BS employs the RS1-BS1 IE and the RS2-BS IE in the UL-MAP to indicate the burst block at a same position. The RS1 sends uplink data according to the RS1-BS IE indication, and the RS2 sends uplink data according to the RS2-BS IE indication;

3) The relay data parameters between the RS and the MS are set in a same way as that in the third embodiment.

Compared with the third embodiment, the RS1 and the RS2 obtain the same bandwidths, but occupy the BS bandwidth by only half of that in the third embodiment.

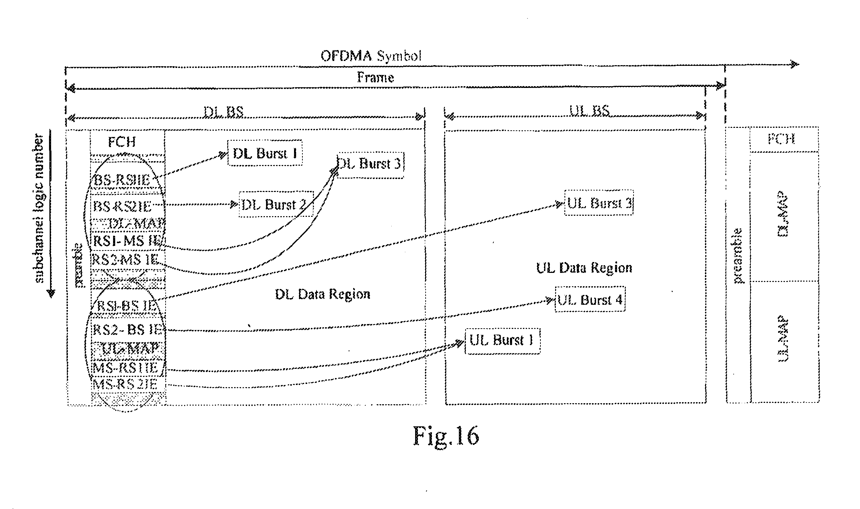

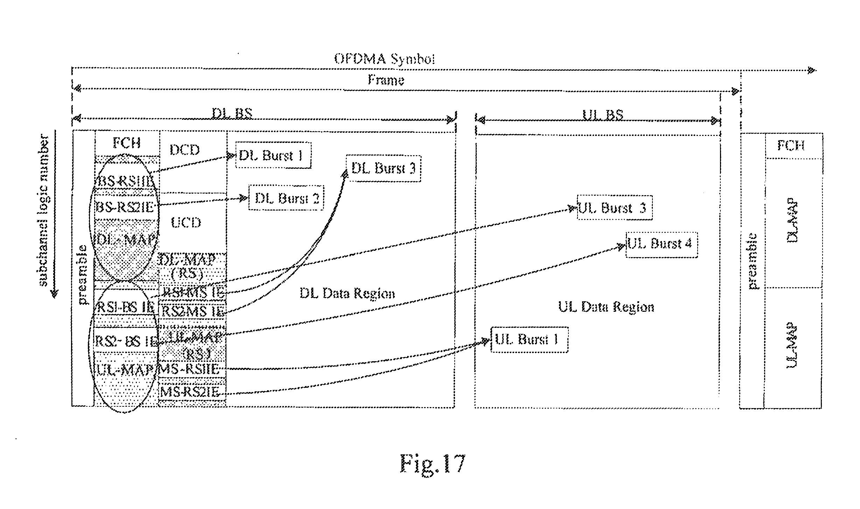

As shown in Figures 16 and 17, in a fifth embodiment of the present invention, solution for implementing handover is as follows:

1) In the BS downlink direction, the BS-RS1 and the BS-RS2 in the DL-MAP indicate burst blocks respectively at different positions, i.e., the BS sends same data to the RS1 and RS2 respectively. The RS1 receives downlink data according to the BS-RS1 IE indication, and the RS2 receives downlink data according to the BS-RS2 IE indication;

2) In the BS uplink direction, the BS employs the RSI-BS IE and the RS2-BS IE in the UL-MAP to indicate burst blocks at different positions. The RS1 sends uplink data according to the RS1 -BS IE indication, and the RS2 sends uplink data according to the RS2-S IE indication;

3) In the RS downlink direction, relay data parameters forwarded by the RS1 and RS2 to the MS can be indicated by the Relay-IE in the DL-MAP (RS) or the DL-MAP in the BS frame structure, and points at the burst block at a same position, which is received in diversity combination by the MS ;

4) In the RS uplink direction, relay data parameters from the MS forwarded by the RS1 and the RS2 to the BS can be indicated by the Relay-IE in the UL-MAP (RS) or the UL-MAP in the BS frame structure, and points at the burst block at a same position. The MS needs to send two same sets of data.

In addition to the third, fourth and fifth embodiments, in the second case of handover, the solution may also include other combinations of the following four aspects: (1) whether the BS-RS1 IE and the BS-RS2 IE in the BS downlink are re-mapped or not; (2) whether the RS1-BS IE and the RS2-BS IE in the BS uplink are remapped or not; (3) whether the RS1-MS IE and the RS2-MS IE in the RS downlink are re-mapped or not; and (4) whether the MS-RS1 IE and the MS-RS2 IE in the RS uplink are re-mapped or not.

Figures 18 and 19 show respectively the handover flows for hard handover and the soft handover performed by the MS in embodiments of the present invention. As exemplified by the MS switching from the RS1 to the RS2 in the second case of handover, the basic handover flow is as follows:

1) before handover, the MS receives data blocks forwarded by the RS1 according to the DL-MAP (Relay-IE) or the DL-MAP (RS) indication directly received from the BS or relayed by the RS1; and sends data blocks to the RS1 according to the DL-MAP (Relay-IE) or the DL-MAP (RS) indication directly received from the BS or relayed by the RS1;

2) the handover process is initiated, the BS ensures that there are two service paths between the BS and the MS, such as, in the downlink direction: (a) BS→RS1, RS1→MS; (b) BS→RS2, RS2→MS; in the uplink direction, (a) MS→RS1, RS1→BS; (b) MS→ RS2, RS2 →BS;

### (for hard handover (FBSS): )

3) The MS ceases receiving data from or sending data to the RS1 firstly;

4) The MS starts to receive data from or send data to the RS2 directly;

5) The handover process is completed.

### ( for soft handover (SHO): )

3) The MS receives data from or sends data to the RS2 directly without interrupting receiving data from or sending data to the RS1;

4) The MS interrupts receiving data from or sending data to the RS1;

5) The handover process is complected.

In the embodiment, when a dedicated Relay Zone is already allocated in the frame structure, operation is similar to that in the first embodiment. A DL-ZONE SWITCH IE is appended in the DL-MAP message to indicate the starting position of a DL Relay Zone, and a UL-ZONE SWITCH IE is appended in the UL-MAP message to indicate the starting position of a UL Relay Zone. Data forwarded by the RS1 or RS2 to the MS present in the DL Relay Zone, data to be relayed by RS1 or RS2 from the MS to the BS present in the UL Relay Zone.

In the technical solution provided by the embodiments of the present invention, when an MS switches between a BS and an RS attached thereto, or between different RSs attached to a BS, service paths are configure by the BS respectively between the handover source station and the MS, and between the handover destination station and the MS, so as to ensure service continuity in the MA handover process and improve the handover reliability. Furthermore, in this method, the downlink and uplink map information elements may be re-mapped to a same burst block position to save bandwidth.

The above embodiments are used for illustrating and explaining the principle of the present invention. It should be appreciated that the present invention is not limited to those embodiments. For those skilled in the art, various alterations and modifications without departing from the substance and the range of the present invention should be covered by the protection scope of the present invention.

## Claims

1. A method for configuring service paths in a relay system, comprising:
configuring the service paths respectively between a handover source station and a mobile, station and between a handover destination station and the mobile station and transmitting same data when it is determined that the mobile station is to be switched between a base station and a relay station attached to the base station, or between different relay stations attached to the base station; and
implementing combined reception of data according to receiving situations of the two paths, and transmitting the same data in the two paths; **characterized in that**
when the mobile, station is to be switched between the base station and the relay station attached to the base station, the base station configures the service paths as follows:
in the base station downlink direction, the base station sends the same data to the relay; station and to the mobile station, and employs different map information elements in a downlink map message of a base station frame structure to indicate parameters of burst blocks sent from the base stations respectively to the relay station and to the mobile station attached to the base station;
in the base station uplink direction, different map information elements in a uplink map message of a base station frame structure are employed to indicate parameters of burst blocks sent to the base station respectively from the relay station and from the mobile station attached to the base station;
in the relay station downlink direction, relay data parameters forwarded by the relay station to the mobile station are indicated by an information element in a relay station downlink map message or a relay information element in a downlink map message of a base station frame structure; and
in the relay station uplink direction, replay data parameters forwarded by the relay station from the mobile station to the base station are indicated by an information element in a relay station uplink map message or a relay information element in an uplink map message of a base station frame structure;
or
when the mobile station is to be switched between different relay stations attached to the base station, the service paths are configured as follows:
in the base station downlink direction, the base station sends the same data to the different relay stations, and employs different map information elements in a downlink map message of a base station frame structure, to indicate parameters burst blocks sent from the base station respectively to the different relay stations attached to the base station;
in the base station uplink direction, different map information elements in a uplink map message of the base station frame structure are employed to indicate parameters of burst blocks sent to the base station respectively from the different relay stations attached to the base station;
in the relay station downlink direction, information elements in the relay station downlink map message or relay information elements in the downlink map message are employed to indicate relay data parameters forwarded by the different relay stations to the mobile station; and
in the relay station uplink direction, information elements in the relay station downlink map message or relay information elements in the downlink map message are employed to indicate relay data parameters forwarded by the different relay stations from the mobile station to the base station.

2. The method according to claim 1, wherein the parameters of the burst blocks point at burst blocks at a same position or different positions.

3. The method according to claim 1, wherein a dedicated relay zone is allocated in the frame structure,
the downlink map message further comprises a downlink zone switching information element for indicating a start position of the downlink relay zone;
the uplink map message further comprises an uplink zone switching information element for indicating a start position of the uplink relay zone;
data relayed by the relay station to the mobile station presents in the downlink relay zone, and data relayed by the relay station to the base station presents in the uplink relay zone.

4. A relay system, comprising:
a determining unit adapted to determine whether a mobile station needs to be switched or not, wherein the switching comprises switching between a base station and a relay station attached to the base station or switching between different relay stations attached to the base station: and
a configuring unit adapted to configure service paths: **characterized in that**
when the mobile station is to be switched between the base station and the relay station attached to the base station, the base station is adapted to configure the service paths as follows:
in the base station downlink direction, send same data to the relay station and the mobile station, and employ different map information elements in a downlink map message of a base station frame structure to indicate parameters of burst blocks sent from the base station respectively to the relay station and to the mobile station attached to the base station;
in the base station uplink direction, employ different map information elements in a uplink map message of a base station frame structure to indicate parameters of burst blocks sent to the base station respectively from the relay station and from the mobile station attached to the base station;
in the relay station downlink direction, indicate relay data parameters forwarded by the relay station to the mobile station by an information element in a relay station downlink map message or a relay information element in a downlink map message of a base station frame structure; and
in the relay station uplink direction indicate relay data parameters forwarded by the relay station from the mobile station to the base station by an information element in a relay station uplink map message or a relay information element in an uplink map message of a base station frame structure;
or
when the mobile station is to be switched between different relay stations attached to the base station, the base station is adapted to configure the service paths as follows:
in the base station downlink direction, send same data to the different relay station, and employ different map information elements in a downlink map message of a base station frame structure to indicate parameters burst blocks sent from the base station respectively to the different relay stations attached to the base station;
in the base station uplink direction, employ different map information elements in a uplink map message of the base station frame structure to indicate parameters of burst blocks sent to the base station respectively from the different relay stations attached to the base stations;
in the relay station downlink direction, employ information elements in the relay station downlink map message or relay information elements in the downlink map message to indicate relay data parameters forwarded by the different relay stations to the mobile station; and
in the relay station uplink direction, employ information elements in the relay station downlink map message or relay information elements in the downlink map message to indicate relay data parameters forwarded by the different relay stations from the mobile station to the base station.

5. The relay system according to claim 4, wherein the parameters of the burst blocks point at burst blocks at a same position or different positions.

6. The relay system according to claim 4, wherein a dedicated relay zone is allocated in the frame structure,
the downlink map message further comprises a downlink zone switching information element for indicating a start position of the downlink relay zone;
the uplink map message further comprises an uplink zone switching information element for indicating a start position of the uplink relay zone;
data relayed by the relay station to the mobile station presents in the downlink relay zone, and data relayed by the relay station to the base station presents in the uplink relay zone.

## Patentansprüche

1. Verfahren zum Konfigurieren von Dienstwegen in einem Relaissystem, das Folgendes umfasst:
Konfigurieren der Dienstwege zwischen einer Verbindungsübergabe-Quellstation und einer Mobilstation bzw. zwischen einer Verbindungsübergabe-Zielstation und
der Mobilstation und Übertragen derselben Daten, wenn bestimmt wird, dass die Mobilstation zwischen einer Basisstation und einer mit der Basisstation verbundenen Relaisstation oder zwischen anderen Relaisstationen, die mit der Basisstation verbunden sind, zu vermitteln ist; und
Implementieren von kombiniertem Empfang der Daten in Übereinstimmung mit Empfangssituationen der zwei Wege und Übertragen derselben Daten in den zwei Wegen; **dadurch gekennzeichnet, dass**
wenn die Mobilstation zwischen der Basisstation und der mit der Basisstation verbundenen Relaisstation zu vermitteln ist, die Basisstation die Dienstwege wie folgt konfiguriert:
in der Abwärtsstreckenrichtung der Basisstation sendet die Basisstation dieselben Daten an die Relaisstation und an die Mobilstation, wobei sie andere Abbildungsinformationselemente in einer Abwärtsstrecken-Abbildungsnachricht einer Basisstations-Rahmenstruktur verwendet, um von der Basisstation an die Relaisstation bzw. an die mit der Basisstation verbundene Mobilstation gesendete Parameter der Burst-Blöcke anzugeben;
in der Aufwärtsstreckenrichtung der Basisstation werden andere Abbildungsinformationselemente in einer Aufwärtsstrecken-Abbildungsnachricht einer Basisstations-Rahmenstruktur verwendet, um von der Relaisstation bzw. von der mit der Basisstation verbundenen Mobilstation an die Basisstation gesendete Parameter der Burst-Blöcke anzugeben;
in der Abwärtsstreckenrichtung der Relaisstation werden durch die Relaisstation zu der Mobilstation weitergeleitete Relais-Datenparameter durch ein Informationselement in einer Abwärtsstrecken-Abbildungsnachricht der Relaisstation oder durch ein Relais-Informationselement in einer Abwärtsstrecken-Abbildungsnachricht einer Basisstations-Rahmenstruktur angegeben; und
in der Aufwärtsstreckenrichtung der Relaisstation werden von der Mobilstation durch die Relaisstation zu der Basisstation weitergeleitete Relais-Datenparameter durch ein Informationselement in einer Aufwärtsstrecken-Abbildungsnachricht der Relaisstation oder durch ein Relais-Informationselement in einer Aufwärtsstrecken-Abbildungsnachricht einer Basisstations-Rahmenstruktur angegeben;
oder
wenn die Mobilstation zwischen anderen Relaisstationen, die mit der Basisstation verbunden sind, zu vermitteln ist, die Dienstwege wie folgt konfiguriert werden:
in der Abwärtsstreckenrichtung der Basisstation sendet die Basisstation dieselben Daten an die anderen Relaisstationen, wobei sie andere Abbildungsinformationselemente in einer Abwärtsstrecken-Abbildungsnachricht einer Basisstations-Rahmenstruktur verwendet, um von der Basisstation jeweils an die anderen Relaisstationen, die mit der Basisstation verbunden sind, gesendete Parameter der Burst-Blöcke anzugeben;
in der Aufwärtsstreckenrichtung der Basisstation werden andere Abbildungsinformationselemente in einer Aufwärtsstrecken-Abbildungsnachricht der Basisstations-Rahmenstruktur verwendet, um jeweils von den anderen Relaisstationen, die mit der Basisstation verbunden sind, an die Basisstation gesendete Parameter der Burst-Blöcke anzugeben;
in der Abwärtsstreckenrichtung der Relaisstation werden Informationselemente in der Abwärtsstrecken-Abbildungsnachricht der Relaisstation oder Relais-Informationselemente in der Abwärtsstrecken-Abbildungsnachricht verwendet, um durch die anderen Relaisstationen zu der Mobilstation weitergeleitete Relais-Datenparameter anzugeben; und
in der Aufwärtsstreckenrichtung der Relaisstation werden Informationselemente in der Abwärtsstrecken-Abbildungsnachricht der Relaisstation oder Relais-Informationselementen in der Abwärtsstrecken-Abbildungsnachricht verwendet, um von der Mobilstation durch die anderen Relaisstationen zu der Basisstation weitergeleitete Relais-Datenparameter anzugeben.

2. Verfahren nach Anspruch 1, wobei die Parameter der Burst-Blöcke auf Burst-Blöcke in derselben Position oder in anderen Positionen zeigen.

3. Verfahren nach Anspruch 1, wobei eine dedizierte Relaiszone in der Rahmenstruktur zugewiesen wird,
die Abwärtsstrecken-Abbildungsnachricht ferner ein Abwärtsstrecken-Zonenvermittlungs-Informationselement umfasst, um eine Anfangsposition der Abwärtsstrecken-Relaiszone anzugeben;
die Aufwärtsstrecken-Abbildungsnachricht ferner ein Aufwärtsstrecken-Zonenvermittlungs-Informationselement umfasst, um eine Anfangsposition der Aufwärtsstrecken-Relaiszone anzugeben;
durch die Relaisstation zu der Mobilstation weitergeleitete Daten in der Abwärtsstrecken-Relaiszone überbracht werden, und durch die Relaisstation zu der Basisstation weitergeleitete Daten in der Aufwärtsstrecken-Relaiszone überbracht werden.

4. Relaissystem, das Folgendes umfasst:
eine Bestimmungseinheit, die beschaffen ist, um zu bestimmen, ob eine Mobilstation vermittelt werden muss oder nicht, wobei das Vermitteln Vermitteln zwischen einer Basisstation und einer mit der Basisstation verbundenen Relaisstation oder
Vermitteln zwischen anderen Relaisstationen, die mit der Basisstation verbunden sind, umfasst; und
eine Konfigurationseinheit, die beschaffen ist, um Dienstwege zu konfigurieren; **dadurch gekennzeichnet, dass**
wenn die Mobilstation zwischen der Basisstation und der mit der Basisstation verbundenen Relaisstation zu vermitteln ist, die Basisstation beschaffen ist, um die Dienstwege wie folgt zu konfigurieren:
in der Abwärtsstreckenrichtung der Basisstation Senden derselben Daten an die Relaisstation und an die Mobilstation und Verwenden anderer Abbildungsinformationselemente in einer Abwärtsstrecken-Abbildungsnachricht einer Basisstations-Rahmenstruktur, um von der Basisstation an die Relaisstation bzw. an die mit der Basisstation verbundene Mobilstation gesendete Parameter der Burst-Blöcke anzugeben;
in der Aufwärtsstreckenrichtung der Basisstation Verwenden anderer Abbildungsinformationselemente in einer Aufwärtsstrecken-Abbildungsnachricht einer Basisstations-Rahmenstruktur, um von der Relaisstation bzw. von der mit der Basisstation verbundenen Mobilstation an die Basisstation gesendete Parameter der Burst-Blöcke anzugeben;
in der Abwärtsstreckenrichtung der Relaisstation Angeben von durch die Relaisstation zu der Mobilstation weitergeleiteten Relais-Datenparametern durch ein Informationselement in einer Abwärtsstrecken-Abbildungsnachricht der Relaisstation oder durch ein Relais-Informationselement in einer Abwärtsstrecken-Abbildungsnachricht einer Basisstations-Rahmenstruktur; und
in der Aufwärtsstreckenrichtung der Relaisstation Angeben von der Mobilstation durch die Relaisstation zu der Basisstation weitergeleiteten Relais-Datenparametern durch ein Informationselement in einer Aufwärtsstrecken-Abbildungsnachricht der Relaisstation oder durch ein Relais-Informationselement in einer Aufwärtsstrecken-Abbildungsnachricht einer Basisstations-Rahmenstruktur; oder
wenn die Mobilstation zwischen anderen Relaisstationen, die mit der Basisstation verbunden sind, zu vermitteln ist, die Basisstation beschaffen ist, um die Dienstwege wie folgt zu konfigurieren:
in der Abwärtsstreckenrichtung der Basisstation Senden derselben Daten an die anderen Relaisstationen und Verwenden anderer Abbildungsinformationselemente in einer Abwärtsstrecken-Abbildungsnachricht einer Basisstations-Rahmenstruktur, um von der Basisstation jeweils an die anderen Relaisstationen, die mit der Basisstation verbunden sind, gesendete Parameter der Burst-Blöcke anzugeben;
in der Aufwärtsstreckenrichtung der Basisstation Verwenden anderer Abbildungsinformationselemente in einer Aufwärtsstrecken-Abbildungsnachricht der Basisstations-Rahmenstruktur, um jeweils von den anderen Relaisstationen, die mit der Basisstation verbunden sind, an die Basisstation gesendete Parameter der Burst-Blöcke anzugeben;
in der Abwärtsstreckenrichtung der Relaisstation Verwenden von Informationselementen in der Abwärtsstrecken-Abbildungsnachricht der Relaisstation oder von Relais-Informationselementen in der Abwärtsstrecken-Abbildungsnachricht, um durch die anderen Relaisstationen zu der Mobilstation weitergeleitete Relais-Datenparameter anzugeben; und
in der Aufwärtsstreckenrichtung der Relaisstation Verwenden von Informationselementen in der Abwärtsstrecken-Abbildungsnachricht der Relaisstation oder von Relais-Informationselementen in der Abwärtsstrecken-Abbildungsnachricht, um von der Mobilstation durch die anderen Relaisstationen zu der Basisstation weitergeleitete Relais-Datenparameter anzugeben.

5. Relaissystem nach Anspruch 4, wobei die Parameter der Burst-Blöcke auf Burst-Blöcke in derselben Position oder in anderen Positionen zeigen.

6. Relaissystem nach Anspruch 4, wobei eine dedizierte Relaiszone in der Rahmenstruktur zugewiesen ist,
die Abwärtsstrecken-Abbildungsnachricht ferner ein Abwärtsstrecken-Zonenvermittlungs-Informationselement umfasst, um eine Anfangsposition der Abwärtsstrecken-Relaiszone anzugeben;
die Aufwärtsstrecken-Abbildungsnachricht ferner ein Aufwärtsstrecken-Zonenvermittlungs-Informationselement umfasst, um eine Anfangsposition der Aufwärtsstrecken-Relaiszone anzugeben;
durch die Relaisstation zu der Mobilstation weitergeleitete Daten in der Abwärtsstrecken-Relaiszone überbracht werden, und durch die Relaisstation zu der Basisstation weitergeleitete Daten in der Aufwärtsstrecken-Relaiszone überbracht werden.

## Revendications

1. Procédé de configuration de chemins de service dans un système de relais, le procédé comprenant les étapes consistant à :
configurer les chemins de service respectivement entre une station d'origine de transfert et une station mobile et entre une station de destination de transfert et la station mobile, et transmettre des mêmes données s'il est établi qu'il convient de commuter la station mobile entre une station de base et une station de relais rattachée à la station de base, ou entre différentes stations de relais rattachées à la station de base ; et
réaliser une réception combinée de données compte tenu de situations de réception des deux chemins, et transmettre les mêmes données dans les deux chemins ;
le procédé étant **caractérisé en ce que** :
s'il convient de commuter la station mobile entre la station de base et la station de relais rattachée à la station de base, la station de base configure les chemins de service de la manière suivante :
dans le sens descendant de la station de base, la station de base transmet les mêmes données à la station de relais et à la station mobile, et utilise différents éléments d'information MAP dans un message MAP descendant d'une structure de trame de la station de base pour indiquer des paramètres de blocs en rafale transmis de la station de base respectivement à la station de relais et à la station mobile rattachées à la station de base ;
dans le sens montant de la station de base, différents éléments d'information MAP dans un message MAP montant d'une structure de trame de la station de base sont utilisés pour indiquer des paramètres de blocs en rafale transmis à la station de base respectivement de la station de relais et de la station mobile rattachées à la station de base ;
dans le sens descendant de la station de relais, des paramètres de données de relais réacheminés par la station de relais vers la station mobile sont indiqués par un élément d'information dans un message MAP descendant de la station de relais ou un élément d'information de relais dans un message MAP descendant d'une structure de trame de la station de base ; et
dans le sens montant de la station de relais, des paramètres de données de relais réacheminés par la station de relais de la station mobile à la station de base sont indiqués par un élément d'information dans un message MAP montant de la station de relais ou un élément d'information de relais dans un message MAP montant d'une structure de trame de la station de base ; ou
s'il convient de commuter la station mobile entre différentes stations de relais rattachées à la station de base, les chemins de service sont configurés de la manière suivante :
dans le sens descendant de la station de base, la station de base transmet les mêmes données aux différentes stations de relais, et utilise différents éléments d'information MAP dans un message MAP descendant d'une structure de trame de la station de base pour indiquer des paramètres de blocs en rafale transmis de la station de base respectivement aux différentes stations de relais rattachées à la station de base ;
dans le sens montant de la station de base, différents éléments d'information MAP dans un message MAP montant de la structure de trame de la station de base sont utilisés pour indiquer des paramètres de blocs en rafale transmis à la station de base respectivement des différentes stations de relais rattachées à la station de base ;
dans le sens descendant de la station de relais, des éléments d'information dans le message MAP descendant de la station de relais ou des éléments d'information de relais dans le message MAP descendant sont utilisés pour indiquer des paramètres de données de relais réacheminés par les différentes stations de relais vers la station mobile ; et
dans le sens montant de la station de relais, des éléments d'information dans le message MAP descendant de la station de relais ou des éléments d'information de relais dans le message MAP descendant sont utilisés pour indiquer des paramètres de données de relais réacheminés par les différentes stations de relais de la station mobile à la station de base.

2. Procédé selon la revendication 1, les paramètres des blocs en rafale pointant vers des blocs en rafale occupant une même position ou différentes positions.

3. Procédé selon la revendication 1, une zone de relais dédiée étant attribuée dans la structure de trame,
le message MAP descendant comprenant en outre un élément d'information de commutation de zone descendante pour indiquer une position de départ de la zone de relais descendante ;
le message MAP montant comprenant en outre un élément d'information de commutation de zone montante pour indiquer une position de départ de la zone de relais montante ;
des données relayées par la station de relais à la station mobile se présentant dans la zone de relais descendante, et
des données relayées par la station de relais à la station de base se présentant dans la zone de relais montante.

4. Système de relais, comprenant :
une unité de détermination conçue pour déterminer s'il convient ou non de commuter une station mobile, la commutation comprenant une commutation entre une station de base et une station de relais rattachée à la station de base ou une commutation entre différentes stations de relais rattachées à la station de base ; et
une unité de configuration conçue pour configurer des chemins de service ;
le système de relais étant **caractérisé en ce que** :
s'il convient de commuter la station mobile entre la station de base et la station de relais rattachée à la station de base, la station de base est conçue pour configurer les chemins de service de la manière suivante :
dans le sens descendant de la station de base, transmettre des mêmes données à la station de relais et à la station mobile, et utiliser différents éléments d'information MAP dans un message MAP descendant d'une structure de trame de la station de base pour indiquer des paramètres de blocs en rafale transmis de la station de base respectivement à la station de relais et à la station mobile rattachées à la station de base ;
dans le sens montant de la station de base, utiliser différents éléments d'information MAP dans un message MAP montant d'une structure de trame de la station de base pour indiquer des paramètres de blocs en rafale transmis à la station de base respectivement de la station de relais et de la station mobile rattachées à la station de base ;
dans le sens descendant de la station de relais, indiquer des paramètres de données de relais réacheminés par la station de relais vers la station mobile par un élément d'information dans un message MAP descendant de la station de relais ou un élément d'information de relais dans un message MAP descendant d'une structure de trame de la station de base ; et
dans le sens montant de la station de relais, indiquer des paramètres de données de relais réacheminés par la station de relais de la station mobile à la station de base par un élément d'information dans un message MAP montant de la station de relais ou
un élément d'information de relais dans un message MAP montant d'une structure de trame de la station de base ;
ou
s'il convient de commuter la station mobile entre différentes stations de relais rattachées à la station de base, la station de base est conçue pour configurer les chemins de service de la manière suivante :
dans le sens descendant de la station de base, transmettre des mêmes données aux différentes stations de relais, et utiliser différents éléments d'information MAP dans un message MAP descendant d'une structure de trame de la station de base pour indiquer des paramètres de blocs en rafale transmis de la station de base respectivement aux différentes stations de relais rattachées à la station de base ;
dans le sens montant de la station de base, utiliser différents éléments d'information MAP dans un message MAP montant de la structure de trame de la station de base pour indiquer des paramètres de blocs en rafale transmis à la station de base respectivement des différentes stations de relais rattachées à la station de base ;
dans le sens descendant de la station de relais, utiliser des éléments d'information dans le message MAP descendant de la station de relais ou des éléments d'information de relais dans le message MAP descendant pour indiquer des paramètres de données de relais réacheminés par les différentes stations de relais vers la station mobile ; et
dans le sens montant de la station de relais, utiliser des éléments d'information dans le message MAP descendant de la station de relais ou des éléments d'information de relais dans le message MAP descendant pour indiquer des paramètres de données de relais réacheminés par les différentes stations de relais de la station mobile à la station de base.

5. Système de relais selon la revendication 4, les paramètres des blocs en rafale pointant vers des blocs en rafale occupant une même position ou différentes positions.

6. Système de relais selon la revendication 4, une zone de relais dédiée étant attribuée dans la structure de trame,
le message MAP descendant comprenant en outre un élément d'information de commutation de zone descendante pour indiquer une position de départ de la zone de relais descendante ;
le message MAP montant comprenant en outre un élément d'information de commutation de zone montante pour indiquer une position de départ de la zone de relais montante ;
des données relayées par la station de relais à la station mobile se présentant dans la zone de relais descendante, et
des données relayées par la station de relais à la station de base se présentant dans la zone de relais montante.
